(19) Europäisches Patentamt
European Patent Office
Office européen des brevets

(11) **EP 2 787 370 B1**

(12) # EUROPEAN PATENT SPECIFICATION

(45) Date of publication and mention of the grant of the patent:
**02.01.2019 Bulletin 2019/01**

(51) Int Cl.:
*G01V 1/00* (2006.01) *G01V 1/36* (2006.01)

(21) Application number: **14162026.0**

(22) Date of filing: **27.03.2014**

(54) **Device and method for de-blending simultaneous shot data**

Vorrichtung und Verfahren zum Entmischen simultaner Aufnahmedaten

Dispositif et procédé pour séparer des données de tir simultanées

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2013 US 201361807959 P**

(43) Date of publication of application:
**08.10.2014 Bulletin 2014/41**

(73) Proprietor: **CGG Services SAS**
**91300 Massy (FR)**

(72) Inventor: **Poole, Gordon**
**91300 Massy (FR)**

(74) Representative: **Petit, Maxime et al**
**Ipsilon**
**Le Centralis**
**63, avenue du Général Leclerc**
**92340 Bourg-la-Reine (FR)**

(56) References cited:
**US-A- 4 953 657**
**US-A- 5 924 049**
**US-A1- 2010 271 904**
**US-A1- 2012 147 701**
**US-A1- 2012 176 861**
**US-A1- 2013 286 777**

- **ABMA R L ET AL: "Separating simultaneous sources by inversion", 71ST EUROPEAN ASSOCIATION OF GEOSCIENTISTS AND ENGINEERS CONFERENCE AND EXHIBITION 2009 : AMSTERDAM, NETHERLANDS, 8 - 11 JUNE 2009, RED HOOK, NY : CURRAN, US, vol. 4, 8 June 2009 (2009-06-08), pages 2642-2646, XP008135762, ISBN: 978-1-61567-236-3**
- **HAMPSON G ET AL: "Acquisition using simultaneous sources", THE LEADING EDGE, SOCIETY OF EXPLORATION GEOPHYSICISTS, US, vol. 27, no. 7, 1 July 2008 (2008-07-01), pages 918-923, XP002556055, ISSN: 1070-485X, DOI: 10.1190/1.2954034**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 787 370 B1

## Description

## BACKGROUND

## TECHNICAL FIELD

Embodiments of the subject matter disclosed herein generally relate to methods and systems for generating, acquiring and processing seismic data and, more particularly, to mechanisms and techniques for separating recorded seismic data generated by simultaneously shooting plural seismic sources.

## DISCUSSION OF THE BACKGROUND

Seismic data acquisition and processing may be used to generate a profile (image) of geophysical structures under the ground (subsurface). While this profile does not provide an accurate location for oil and gas reservoirs, it suggests, to those trained in the field, the presence or absence of such reservoirs. Thus, providing a high-resolution image of the subsurface is important, for example, to those who need to determine where the oil and gas reservoirs are located.

In the past, conventional land seismic acquisition generally employed multiple vibrators (seismic sources) acting one at a time. In land-based operations, the vibrators are positioned at a source location and then actuated. Once activated, the vibrators generate a sweep that typically lasts between five and 20 seconds and typically spans a predetermined range of frequencies. A recording system that is connected to a plurality of receivers, typically geophones for land-based seismic exploration, is employed to receive and record the response data. For reflection seismology, the record length is typically set to equal the sweep length plus a listen time equal to a given two-way travel time, which is the time required for the seismic energy to propagate from the source through the earth to the deepest reflector of interest and back to the receiver. The vibrators are then moved to a new source location and the process is repeated.

In traditional marine seismic acquisition, a vessel tows plural streamers having multiple seismic receivers configured to record seismic data. The vessel also tows a seismic source that imparts energy into the water. The seismic energy travels toward the subsurface and is partially reflected back to the sea surface. The seismic recorders record the reflected seismic waves.

When the source (either land source or marine source) is fired in standard data acquisition, the subsequent recording time is defined so that all useful reflected/diffracted energy is recorded before the next source is fired. This delay time imposes constraints on the acquisition rate and, hence, increases the cost of acquisition.

To reduce acquisition time, it is possible to simultaneously shoot the sources. The term "simultaneously" should be loosely interpreted in this description, i.e., if first and second sources are considered, the second source may fire seconds after the first source was fired, and the shooting is still considered to be simultaneous. In other words, the term "simultaneous" encompasses the case in which the second source fires during the listening time corresponding to the first source. From the seismic receivers' point of view, acquisition of simultaneous source data means that the signals from two or more sources interfere during a given listening time, at least for part of the acquired seismic record. By acquiring data in this way, the time taken to shoot a dataset is reduced, along with acquisition costs. As an alternative to reducing acquisition time, a higher density dataset may be acquired in the same time. For such data to be useful, it is necessary to develop processing algorithms to handle source interference (cross-talk noise).

Source interference appears because subsurface reflections from an early source excitation may be comingled with those that have been sourced later, i.e., a "blended source" survey is acquired. Note that this is in contrast to conventional non-blending surveying techniques, wherein the returning subsurface reflections from one source are not allowed to overlap with the reflections of another source. Although the blended-source approach has the potential to reduce time in the field, thereby proportionally reducing survey cost, one problem is that it can be difficult to separate the individual shots thereafter, which is necessary in the processing stage. In other words, what is needed in interpreting seismic data is the depth of each reflector, and the depth of a reflector is determined by reference to its two-way seismic travel time as generated by a single source. Thus, in a multiple-source survey the goal is to determine which of the observed subsurface reflections is associated with each source, i.e., to de-blend the data; otherwise, the two-wave travel time cannot be reliably determined.

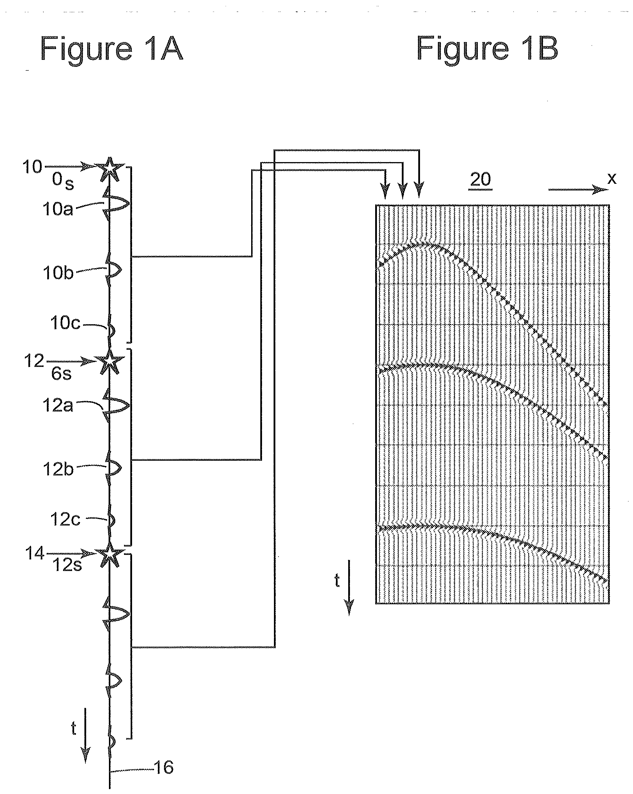

In this regard, Figure 1A shows sources being actuated at different spatial positions 10, 12 and 14 with delay times such that the recorded wavelets 10a-c corresponding to spatial position 10 do not interfere (in time) with wavelets 12a-c corresponding to spatial position 12. The signal recorded at the receiver can be considered a single continuous recording/trace (16). Alternatively, single trace 16 may be divided into plural traces, based on the listening time associated with each shot point 10, 12 and 14. In this way, continuous trace 16 is split into regular seismic traces for each individual shot as shown in Figure 1B. Traces illustrated in Figure 1B form a receiver gather 20. Each trace in receiver gather 20 relates to a different shot, i.e., has a given location in the field, which is illustrated by having different values on axis X (m), and each wavelet has a different time on a temporal axis t (s).

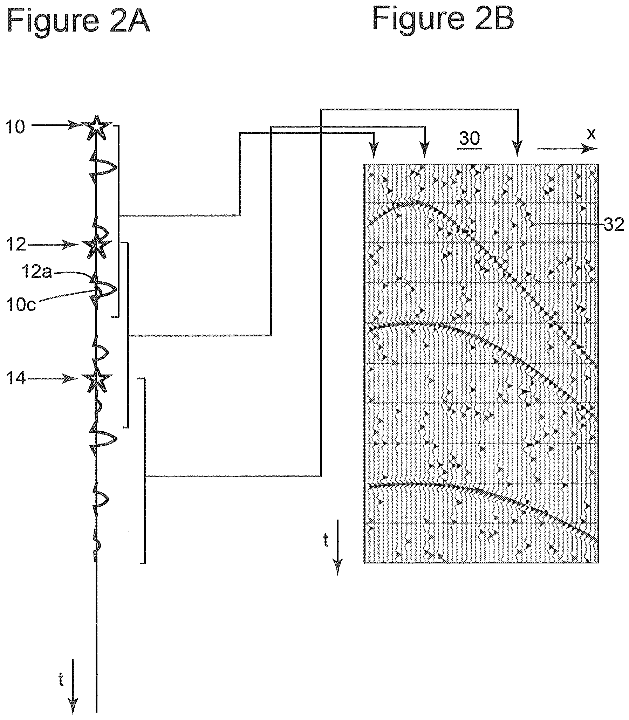

Figure 2A shows a similar source configuration, but now the sources are simultaneously activated so that, for example, wavelet 10c might be superimposed (in time) over wavelet 12a, resulting in blended data. Figure 2B shows the receiver gather 30 formed though pseudo-de-blending. Pseudo-de-blending involves forming regular seismic traces from the continuous recording based on the start time of each shot's actuation, with no attempt to mitigate cross-talk noise. The data of Figure 2B has been shot in less time than the data in Figure 1B, but cross-talk 32 is observed, and noise on one trace is signal on another trace.

Thus, for gather 30 in Figure 2B, it is necessary to separate the energy associated with each source (de-blend) as a preprocessing step, and then to proceed with conventional processing. To make separation easier, it is generally advantageous to use a variety of different source signals, for example, different vibroseis sweeps or pseudo-random sweeps for land acquisition. When energy from a given source is correlated with the sweep signal, this allows a designature operator to be applied on the acquired seismic data, which results in focusing the energy of that source while keeping energy from other sources dispersed. The actual timing of the shots may also be used to successfully de-blend the energy from the sources.

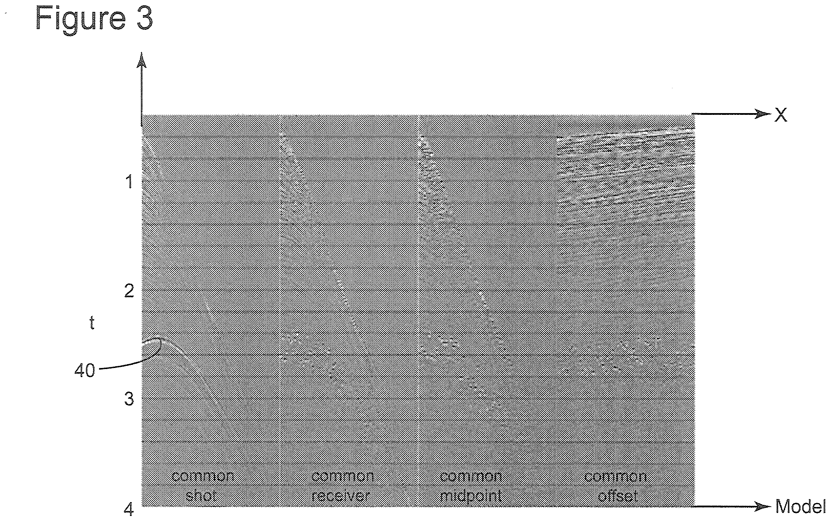

Randomized timing of source actuation gives rise to a randomness in timing of cross-talk noise in all domains other than the shot domain. For example, Figure 3 (corresponding to Hampson et al., "Acquisition using simultaneous sources," Leading Edge, Vol. 27, No. 7) shows a marine simultaneous shooting dataset in different domains, i.e., common shot, common receiver, common midpoint, common offset.

Traditionally, de-blending of simultaneous shooting data falls into the following three categories, all of which rely on some degree of randomized shooting. The first category is impulsive de-noising. This method (disclosed for example by Stefani et al., "Acquisition using simultaneous sources," 69th EAGE Conference & Exhibition) uses the fact that when data is sorted into any domain other than the common shot, the cross-talk noise from other sources has random timing as illustrated in Figure 3. Note that in the common shot domain, cross-talk noise 40 is continuous. This random timing allows the use of impulsive-noise attenuation techniques which are already available and used in other processing steps, for example, swell-noise attenuation. While this method can be effective for removing the strongest cross-talk energy, low-amplitude cross-talk noise is not seen as impulsive and will not be removed. Further, this method may attenuate the primary energy because it makes use of thresholds.

A second category includes iterative coherency enhancement/de-noising. Iterative coherency enhancement/de-noising techniques are described in, e.g., Abma et al., "Separating simultaneous sources by inversion," 71st EAGE Conference & Exhibition, and rely on the fact that cross-talk noise on some traces is a duplication of signal energy on other traces. This means that with knowledge of the timing of all shots, a signal estimate made for one source can then be used to reduce the level of cross-talk for all other sources.

A third category includes the full modeling of energy from all sources. The full modeling scheme (e.g., Akerberg et al., "Simultaneous source separation by sparse Radon transform," 78th Ann. Internat. Mtg.: Soc. of Expl. Geophys, and Moore et al., Simultaneous source separation using dithered sources, 78th Ann. Internat. Mtg.: Soc. of Expl. Geophys.) has similarities to the iterative de-noising method, except that this formulation solves the relationship between source energy and cross-talk noise implicitly at the core of the problem formulation. The equations can be formulated as designing a transform domain for each source or spatial area (e.g., tau-p domain, Fourier domain, etc.) such that when it is reverse-transformed and re-blended, the raw input data is reconstructed as accurately as possible in a least squares sense.

This technology has the timings and positioning of all sources at the core of the algorithm and also relies on a sparse solution to the equations. Once the transform domains have been calculated, the final step to de-blend the data requires application of reverse-transform without re-blending. While this method may result in some filtering of the original data, it removes low-amplitude cross-talk noise and preserves the primary signal. This method could be considered an alternate way of solving the same problem as the iterative coherency enhancement/de-noising technique (with the analogue of sparse least squares Radon versus inversion through "iterative cleaning").

All the above-discussed methods rely on randomized shooting. However, as it is discussed next, there is an alternative to the randomized shooting methods that is capable of de-blending the seismic data acquired with a simultaneous shooting scheme.

Document US2012147701 (A1) deals with reducing the maximum output of a seismic source array.

Document US2012176861 (A1) discloses a method for collecting a blended source seismic survey determining a random time separation between successive shots.

## SUMMARY OF THE INVENTION

According to the embodiment disclosed in claim 1, there is a method for de-blending seismic data associated with a subsurface of the earth.

According to another embodiment disclosed in claim 14, there is a computing system for de-blending seismic data associated with a subsurface of the earth. The computing device is configured to implement any of the methods discussed herein.

## BRIEF DESCRIPTION OF THE DRAWINGS

For a more complete understanding of the present invention, reference is now made to the following descriptions taken in conjunction with the accompanying drawings, in which:

Figures 1A-B are graphical illustrations of un-blended seismic data;

Figures 2A-B are graphical illustrations of blended seismic data;

Figure 3 is a graphical illustration of cross-talk present in seismic data;

Figure 4 is a schematic illustration of a shooting sequence according to an embodiment;

Figure 5 is a flowchart illustrating a method for estimating de-blended data;

Figures 6A-B are schematics illustrating how the various traces are processed for obtaining estimated de-blended seismic data;

Figure 7 if a flowchart of a method for removing cross-talk from blended data based on estimated de-blended data;

Figure 8 is a schematic illustrating how the estimated de-blended data is used to remove cross-talk from recorded seismic data;

Figure 9 is a schematic diagram illustrating the de-blending of recorded seismic data;

Figure 10 is a flowchart of a method for de-blending seismic data;

Figure 11 is a flowchart of a method for using estimated de-blended data to remove cross-talk from recorded seismic data;

Figure 12 is a schematic diagram of a marine seismic surveying system; and

Figure 13 is a schematic diagram of a computing device configured to perform one or more of the above-discussed methods.

## DETAILED DESCRIPTION OF THE INVENTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a marine seismic system having two seismic sources. However, the embodiments to be discussed next are not limited to a marine seismic system with two sources, but may also be applied to a land seismic system, a marine system, or ocean bottom cable (OBS) system with many sources.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment, there is a method for de-blending seismic data acquired by simultaneous shooting. In one application, a patterned constant delay is used for firing two or more seismic sources. The constant delay ensures that a section of each trace in the acquired seismic data is free from interference noise from other sources. These free noise portions of the traces (i.e., the uncontaminated sections of the traces) are then interpolated for finding uncontaminated sections of other traces. These new traces are used to de-blend the interleaving traces. This method is now discussed in more detail.

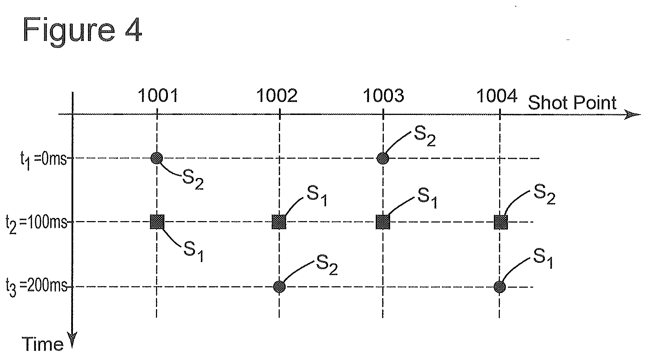

For simplicity, the de-blending method is discussed based on seismic data generated with first and second sources. However, the de-blending method also applies to more than two sources as will be recognized by those skilled in the art. The first and second sources may be towed by the same vessel or by two different vessels. One possible shooting sequence for the first and second sources is illustrated in Figure 4 and is as follows: for an odd shot point (e.g., 1001 or 1003), second source S2 fires with no delay relative to a given reference time $t_1$ while first source S1 is delayed by 1000 ms; for an even shot point (e.g., 1002, 1004), first source S1 fires with a delay of 1000 ms relative to reference $t_1$, and second source S2 fires with a delay of 2000 ms relative to the same reference $t_1$. These numbers are illustrative and are not intended to limit the invention. For example, some or all of the above-noted delays of 1000 ms and 2000 ms may be modified to include a random shift, i.e., another pattern may be (S1/S2): even shot - 1000/0 ms delays, odd shot - 1000/2000 ms delays, next even shot again 1000/0 ms delays, next odd shot again 1000/2000 ms delays, another even shot 978/20 ms delays, another odd shot 1036/1947 ms delays, still another even shot 1002/4 ms delays, still another odd shot 1034/1998 ms delays and so on. In another application, a small dithering may be applied to the time delays. Note that the time delays may take other values as long as there are traces that include signals from a single source (no cross-talk from other sources) for the time delay.

A feature of this shooting sequence or any other shooting sequence that make the de-blending method to be discussed possible is that plural traces have at least an initial portion containing data generated by one source and not by both sources, i.e., uncontaminated portions. The length of these uncontaminated portions is 1000 ms in this embodiment. However, this is only an exemplary number. Note that for this embodiment, there is a 2:1 timing pattern for the second source relative to the first source.

Regarding this timing pattern, note that existing methods do not entertain the idea of constant time shifts, because the use of a constant time shift leaves cross-talk energy continuous in all domains (e.g., shot, receiver, channel, common mid-point (cmp), etc.) as discussed above with regard to Figure 3. However, the method to be discussed here uses the strength that a significant time delay leaves a section of the data unaffected by interference noise. The shift is alternated between odd and even shot points so that an iterative interpolation and subtraction flow can be used for de-blending. In other words, the novel processes discussed herein use a given shooting pattern designed so that each source is shot first and the remainder of the sources are shot with a constant time delay relative to the first shot source. This means that the given pattern includes a series of shot members, and each shot member has one source of the plural sources being shot first and the remainder of the plural sources being shot simultaneously, with the constant time delay, after the one source has been fired.

As noted above, the method is applicable for two or more sources on one or more vessels. For this particular embodiment, the example of one vessel firing port and starboard sources (S1 and S2) as illustrated in Figure 4 is selected. Different from this pattern, during traditional acquisition, the starboard and port sources may fire in an alternating fashion with, for example, 18.75 m spacing, observing the following pattern: odd shot point: Starboard, even shot point: Port, odd shot point: Starboard, even shot point: Port, and so on. For the case of dithered simultaneous shooting, starboard and port fire with a dither on port side only, observing the following pattern: odd shot point: Starboard and Port (dither), even shot point: Starboard and Port (dither), odd shot point: Starboard and Port (dither), even shot point: Starboard and Port (dither). However, neither of these examples uses constant time delays.

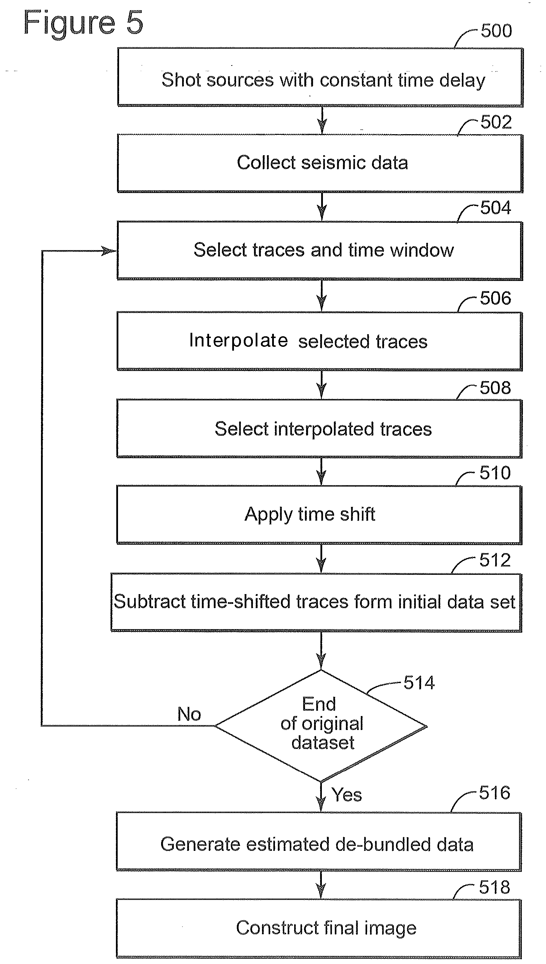

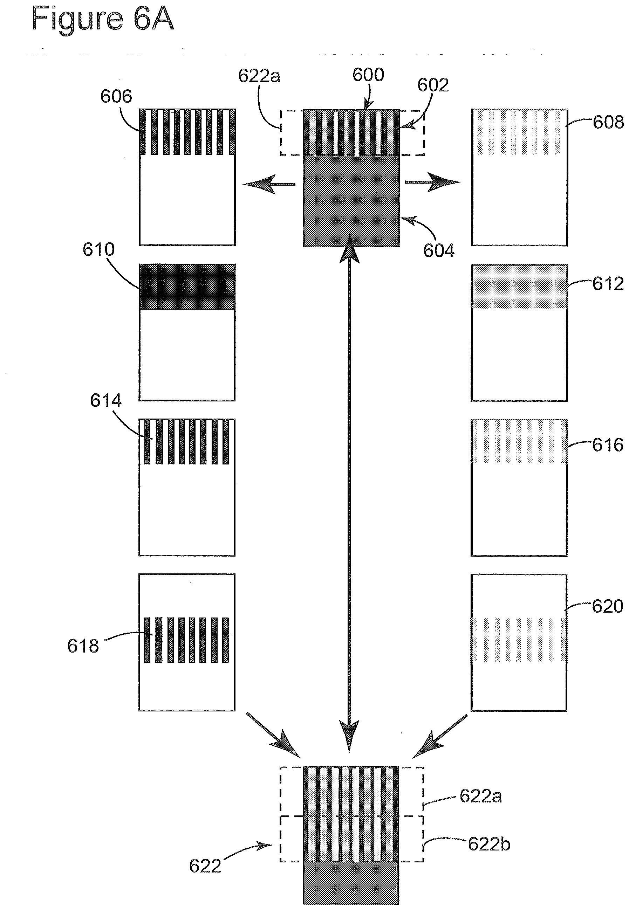

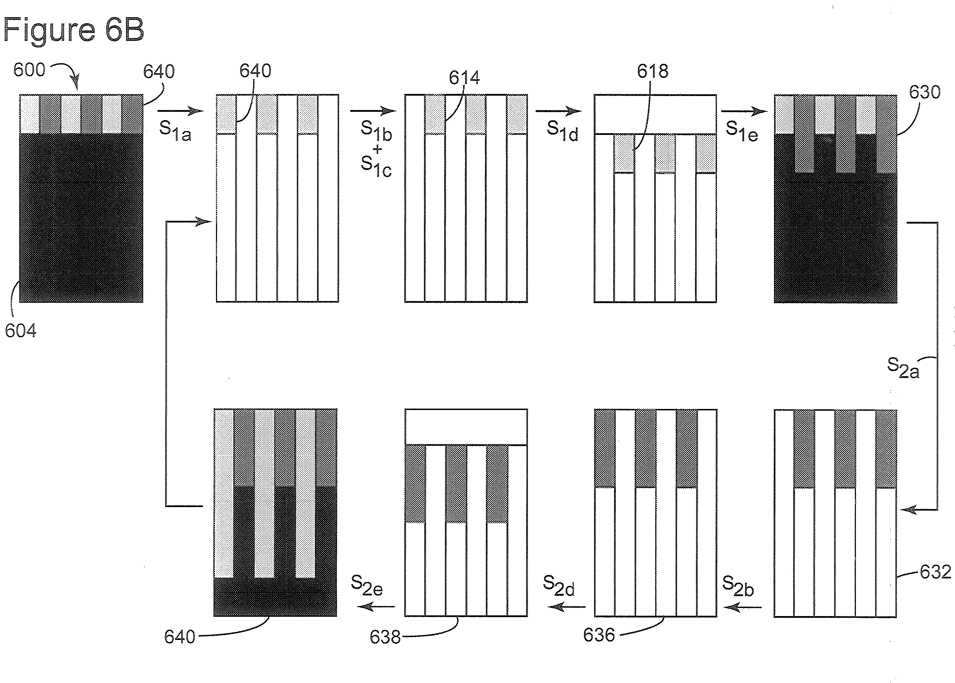

Returning to the firing sequence illustrated in Figure 4, seismic data is collected with seismic recorders and processed as now discussed. Note that seismic recorders may include a hydrophone, geophone, particle motion vector, accelerometer, differential pressure, electromagnetic sensor, or a combination thereof. The data processing algorithm is now discussed with reference to Figures 5 and 6. Figure 5 is a flowchart for the data processing algorithm and Figure 6 illustrates the process in a cartoon-type fashion for a better understanding. The sources are shot with constant time delay as illustrated in Figure 5 in step 500, and the seismic data is collected in step 502. Collected seismic data is schematically illustrated in Figure 6A as element 600. Note that traces of the initial seismic data 600 have an uncontaminated part 602 (corresponding to a first window 622a) having energy from a single source (because of the constant time delay between shooting the sources) and a comingled part 604 that includes energy from both sources (i.e., blended data). In step 504, time-windowed traces are selected that are unaffected by the cross-talk noise and split, as shown in Figure 6A, into traces 606 corresponding to odd shot points and source S1 and traces 608 corresponding to even shot points and source S2.

In step 506, selected traces 606 corresponding to odd shot points and source S1 are interpolated to even shot points and source S1 to obtain a full set of traces 610 for source S1. A similar interpolation process is applied to traces 608 for determining the odd shot points for source S2 to obtain another full set of traces 612 for source S2. The shotpoint interpolation may be applied in a number of different domains, e.g., common offset, common channel, common midpoint, or common receiver. The interpolation may be performed using a number of different methods, e.g., sinc interpolation, FK interpolation, interpolation in the curvelet domain, FX interpolation, Gulunay FK interpolation, linear tau-p interpolation, parabolic tau-p interpolation, hyperbolic tau-p interpolation, shifted hyperbolic tau-p interpolation, etc. The choice of interpolation algorithm may depend on data complexity and aliasing. A mixture of algorithms may be used, e.g., sinc interpolation for low frequencies, and FX interpolation for high frequencies. In step 508, traces 614 are selected from the full set of traces 610. Traces 614 are selected to contain data intended to be used as a cross-talk estimate for the next step, e.g., the traces that were not selected in step 504. For example, traces 614 correspond to even shot point traces generated by source S1. Traces 616 are selected in the same step from the full set of traces 612 based on the same criterion, i.e., to contain data intended to be used as a cross-talk estimate for the next step. For example, traces 616 correspond to odd shot point traces generated by source S2. In step 510, a time shift is applied to traces 614 and 616 to obtain time-delayed traces 618 and 620, respectively. The time shift may be exactly the time delay between the sources' shooting sequence, i.e., 1000 ms for the embodiment of Figure 4. Note that the term "trace" is used in this application to mean the full trace as in dataset 600 and also to mean part of a trace as in traces 606 to 620.

In step 512, time-delayed traces 618 and 620 are subtracted from the original dataset 600 for obtaining estimated de-blended dataset 622, which has been partially de-blended at least for a second window 622b. The estimated de-blended dataset 622 still includes cross-talk noise and, for this reason, it is used in a later process for calculating the de-blended data.

An adaptive subtraction may be used in step 512 instead of the traditional subtraction. The scheme of adaptive subtraction involves improving the matching of one dataset to another through the use of one or more convolution filters. This scheme is disclosed, for example, in Verschuur D. J., Seismic multiple removal techniques - past, present and future, EAGE publications, 2006, and thus, no details are presented herein. Note that the scheme of adaptive subtraction does not have to use only interpolated traces; it may use one or more of the original traces. Forms of adaptive subtraction other than using convolutional filters are also available, e.g. Herrmann, F., and Moghaddam, P., 2004, Curvelet-based nonlinear adaptive subtraction with sparseness constraints, SEG conference proceedings. The adaptive subtraction may also be applied in a model domain, e.g., transform interpolated data and data containing cross-talk noise from the time domain into a model domain (e.g.,

linear radon, parabolic radon, fk, etc.), apply adaptive subtraction, calculate the adapted cross-talk noise to be removed, reverse transform the adapted cross-talk noise to the time domain, and subtract this transformed data from the data containing the cross-talk noise. The model domain may be a function of one or more spatial dimensions. Another alternative may involve applying the full deblending process in a model domain, i.e., transform the input data including signals and cross-talk noise to a model domain, interpolate the data in the model domain, adaptive subtraction in the model domain, and so on as discussed above.

The algorithm evaluates in step 514 if the end (i.e., the last window) of the initial seismic data 600 has been reached. If the answer is no, the process returns to step 504 to remove the cross-talk from a next window. If the answer is yes, the process advances to step 516 to generate the estimated de-blended data.

An optional scheme for processing the same input data 600 is illustrated in Figure 6B and this scheme may use the result from the first deblending pass of data 606 before interpolating data 608. More specifically, this flow may include the following steps:(S1a) select traces 606 and time window unaffected by cross-talk noise (e.g., 1 second for the first step); (S1b) interpolate the selected traces 606, (S1c) select traces 614 containing data to be used as cross-talk estimate, e.g., the traces not selected in step S1a, (S1d) shift traces 614 down with the lag time to obtain traces 618, and (S1e) subtract from input data 600 traces 618 to reveal next iteration of deblended data 630. Note that steps (S1a) to (S1d) are similar to the method discussed above with regard to Figures 5 and 6A. Step (S1e) is different in the sense that the data from the other source S2 is not used. More specifically, in step (S2a) traces 632 associated with the second source S2 are selected from traces 630 for a time window unaffected by cross-talk noise, e.g., 2 second for this iteration as the data associated with the first source S1 has already been partially subtracted. In step (S2b) traces 632 are interpolated to obtain traces 634, in step (S2c) traces 636 are selected that contain data to be used as cross-talk estimate, i.e., traces not selected in step (S2a), in step (S2d), traces 636 are shifted down with the time lag to obtain traces 638, and in step (S2e), traces 638 are subtracted from input data 600 to reveal the next iteration of deblended data. Then, the process returns to step (S1a) and is iteratively repeated until the entire length of the traces are deblended.

Returning to the method discussed with regard to Figures 5 and 6A, note that interpolation after each iteration is not strictly necessary, but optionally. Then, in step 518 a final image of the surveyed subsurface is generated based on the estimated de-blended data from step 516.

The estimated de-blended data obtained in step 516 is the estimated data. Although it can be used as-is for generating a final image of the surveyed subsurface, as described in step 518, according to another embodiment, it is possible to further use the estimated de-blended data to remove the interpolation data from the main output data. In other words, with the process to be described next, the interpolated data is used just for deblending purposes.

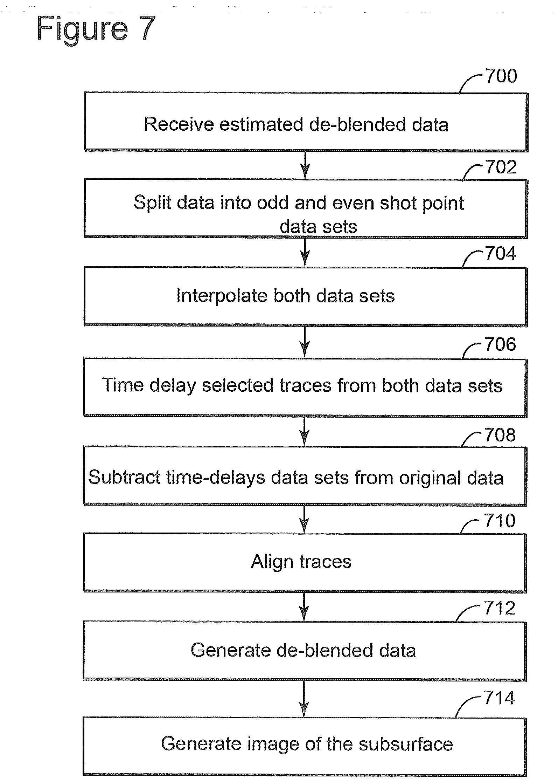

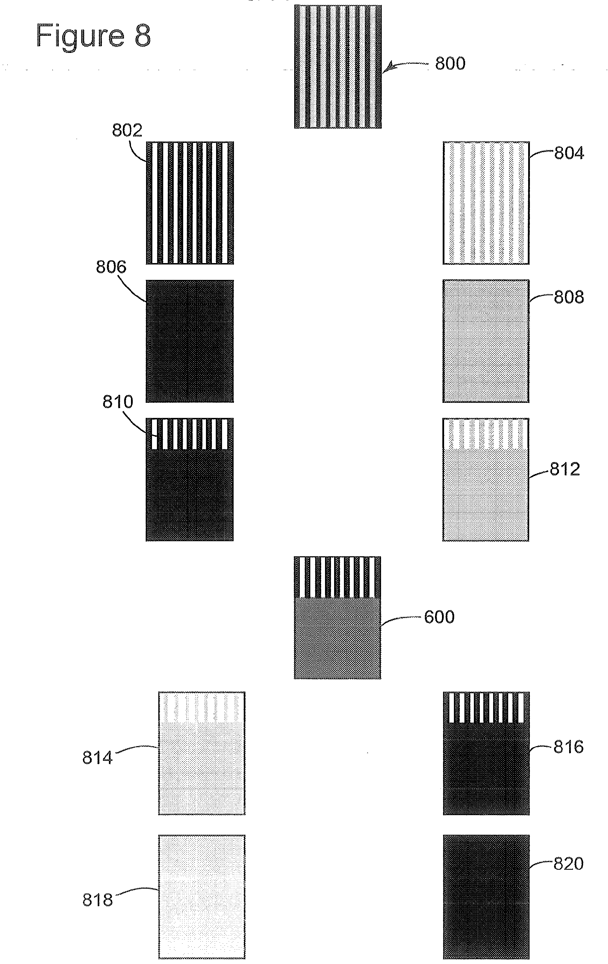

Thus, according to a process illustrated in Figure 7, the estimated de-blended data from step 516 is received as input in step 700. This step is graphically illustrated in Figure 8, as element 800. Then, in step 702, the estimated de-blended data 800 is split into de-blended data 802 corresponding to source S1 for odd shot points and data 804 corresponding to source S2 for even shot points.

In step 704, the odd shot point data 802 for source S1 is interpolated to generate full shot point data 806 for source S1 and even shot point data 804 for source S2 is interpolated to generate full shot point data set 808 for source S2. In step 706, interpolated even shot point data for source S1 is time-shifted with the constant time delay between shooting the sources to obtain data 810, and interpolated odd shot point data for source S2 is time-shifted with the same constant time delay to obtain data 812.

In step 708, data set 810 is subtracted from original data 600 to obtain even data set 814 for source S2, and data set 812 is subtracted from original data 600 to obtain data set 816 for source S1. In step 710, the traces are aligned and the finally de-blended data, including odd and even shot point data 818 for source S2 and odd and even shot point data 820 for source S1, is generated in step 712. With this data, a final image of the subsurface may be calculated in step 714.

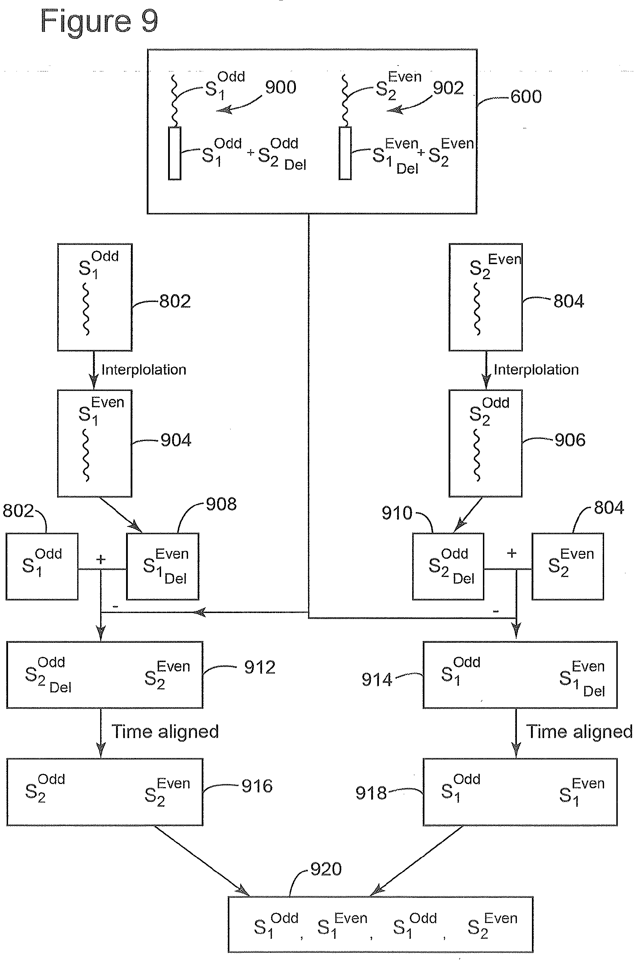

Another way to graphically illustrate the method of Figure 7 is now discussed with regard to Figure 9. The following convention is used for the symbols illustrated in Figure 9. An uncontaminated trace generated by source $S_i$ is identified by symbol $S_i$ and illustrated as a wiggly line. If the trace corresponds to an odd or even shot point, the word "odd" or "even" appears as a superscript. If a trace includes unblended data from source S1 and blended data from sources S1 and S2, then a wiggly line represents the unblended data and a rectangle connected to the wiggly line indicates that the data is blended from both sources and the symbols of both sources are placed next to the rectangle. When a time delay is applied to a trace, the word "del" appears as a subscript.

Figure 9 shows the initial seismic data 600 (see Figure 6A) having odd traces 900 and even traces 902. For the specific embodiment illustrated in Figure 4, traces 900 have a first portion of non-blended data corresponding to source S1 and a second portion of blended data corresponding to sources S1 and S2. Traces 902 have a first portion of non-blended data corresponding to source S2 and a second portion of blended data corresponding to sources S1 and S2. Odd traces 802 corresponding to source S1 and even traces 804 corresponding to source S2, which were separated as discussed with regard to Figures 6 and 8, are interpolated to obtain even traces 904 corresponding to source S1 and odd traces 906 corresponding to source S2. Traces 904 are time-shifted by the constant delay time to obtain delayed traces 908, and traces 906 are shifted by the same delay time to obtain delayed traces 910.

Odd traces 802 corresponding to source S1 are interleaved with even delayed traces 908 also corresponding to source S1, and then this result is subtracted from initial traces 600 to obtain odd delayed and even traces 912 for the second source S2. Similarly, odd delayed traces 910 are interleaved with even traces for source S2, and then the result is subtracted from the initial traces 600 to obtain odd and even delayed traces 914 for the first source. These traces 912 and 914 are time-aligned to form traces 916 for source S2 and traces 918 for source S1, after which they are combined to form de-blended traces for sources S1 and S2.

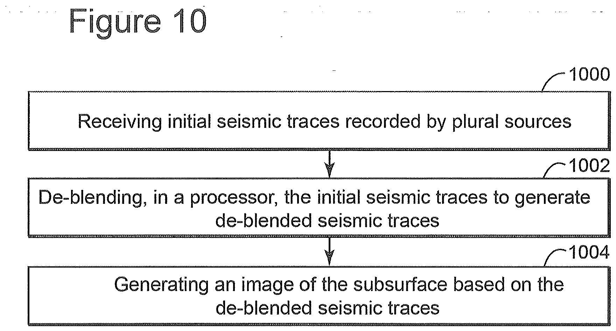

The process described in Figures 6 and 7 is summarized in the flowchart of Figure 10. According to Figure 10, a method for de-blending seismic data associated with a subsurface of the earth includes a step 1000 of receiving initial seismic traces recorded by plural sources; a step 1002 of de-blending, in a processor, the initial seismic traces to generate de-blended seismic traces; and a step 1004 of generating an image of the subsurface based on the de-blended seismic traces. The plural seismic sources are shot with a given pattern so that each source is shot first and the remainders of the sources are shot with a constant time delay relative to the first shot source.

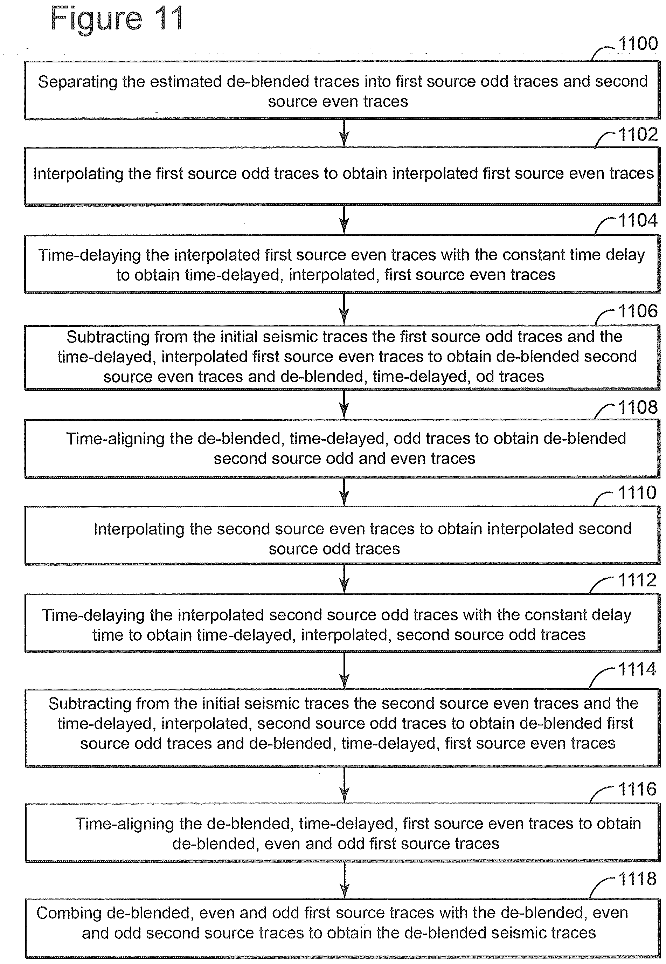

The process described in Figures 8 and 9 is summarized in the flowchart of Figure 11. According to Figure 11, there is a method that includes a step 1100 of separating the estimated de-blended traces into first source odd traces and second source even traces; a step 1102 of interpolating the first source odd traces to obtain interpolated first source even traces; a step 1104 of time-delaying the interpolated first source even traces with the constant time delay to obtain time-delayed, interpolated first source even traces; a step 1106 of subtracting from the initial seismic traces the first source odd traces and the time-delayed, interpolated first source even traces to obtain de-blended second source even traces and de-blended, time-delayed odd traces; a step 1108 of time-aligning the de-blended, time-delayed odd traces to obtain de-blended second source odd and even traces; a step 1110 of interpolating the second source even traces to obtain interpolated second source odd traces; a step 1112 of time-delaying the interpolated second source odd traces with the constant delay time to obtain time-delayed, interpolated second source odd traces; a step 1114 of subtracting from the initial seismic traces the second source even traces and the time-delayed, interpolated second source odd traces to obtain de-blended first source odd traces and de-blended, time-delayed first source even traces; a step 1116 of time-aligning the de-blended, time-delayed first source even traces to obtain de-blended even and odd first source traces; and a step 1118 of combining de-blended even and odd first source traces with the de-blended even and odd second source traces to obtain the de-blended seismic traces.

The above-discussed embodiments were exemplified, for simplicity, for a case in which only two sources have been fired simultaneously, with a constant time delay. However, those skilled in the art would recognize that these embodiments may be adapted to fire more than two sources. For example, consider that a seismic survey employs N sources, when N is a natural number, i.e., a positive integer number. The sources are fired in a given pattern according to a shooting sequence. The shooting sequence includes plural members that are repeated in time. For example, the first member has source S1 shot first followed, after the constant time delay, by simultaneously shooting sources S2 to SN. The second member has source S2 shot first followed, after the constant time delay, by simultaneously shooting sources S3 to SN and S1. The last member in this sequence has source SN shot first followed, after the constant time delay, by simultaneously shooting sources S1 to S(N-1). After this, the sequence may be repeated as many times as necessary.

A trace recorded according to the "j" element of the sequence is given by $T_j^i,$ where "i" is the source that was shot first for the "j" element. $T_j^i$ has a first portion (the uncontaminated portion) given by j=i, i.e., $T_i^i first$ and a second contaminated portion given by $T_j^i second$ with "j" being different from "i." A simple possible mapping of the traces illustrated in Figure 6A to the above-introduced notation $T_j^i$ is as follows: traces $606 = T_1^1 first;$ traces $610 = T_j^1 first,$ with j taking any value, traces 614 $T_j^1 first$ with j taking any value different than i=1, traces 618 = $T_j^1 first(t - t_0),$ with j taking any value different than i=1, t being the actual time and $t_0$ being the constant time delay.

The shooting pattern discussed in the above embodiments may be changed. For example, for a case in which three sources A, B and C are shot simultaneously with a constant time delay, the firing sequence may include a first element A, B, C followed by a second element B, C and A, followed by a third element C, A and B. After this, the firing sequence may be repeated a desired number of times. Other firing patterns may be used as long as the sources are fired with a constant time delay, so that at the beginning of the shooting, only one source shoots, and the remaining sources shoot after the constant time delay, so that the recorded traces include a non-blended portion (corresponding to a single source) and a blended portion (corresponding to all other sources). In one application, only part of the seismic survey is conducted following one or more of the above shooting patterns and de-blending processes. For example, it is possible to use traditional simultaneous shooting or non-simultaneous shooting for some lines of the survey, and the simultaneous shooting with constant time delays discussed above for other lines of the survey. In this way, the constant lag time leaves part of the data unaffected by cross-talk noise, and this clean data is then interpolated and subsequently subtracted from the input data for de-blending it.

The processes discussed above with regard to Figures 5 and 7 may be modified so that one or more of steps 704-710 may be replaced with a step of adaptive subtraction with or without interpolation, which is appropriate in some cases, i.e., when the structure is not so complex. For example, the attenuation of the direct arrival (wave travelling directly from source to receiver) may be more effective with a straight adaptive subtraction. Alternatively, the step of adaptive subtraction may be performed with interpolation, i.e., it is possible to interpolate the cross-talk estimate and subtract it from the input as follows: interpolate selected traces as in step 506, iteratively deblend the data as in steps 514, calculate a cross-talk estimate as in step 516, interpolate the cross-talk estimate as in step 704 and adaptively subtract the cross-talk estimate from the original data similar to step 708.

After the deblending process, there is likely to be some residual cross-talk noise. If a small dithering has been used in addition to the patterned timing discussed with regard to Figure 4, it will be possible to apply a random noise attenuation method as a secondary process. Examples of such a secondary process include general filtering methods, e.g., fx-deconvolution, fx projection filtering, structural dip filtering, etc, but also impulsive denoise algorithms like those used routinely in the industry, for example, to remove cross-talk noise.

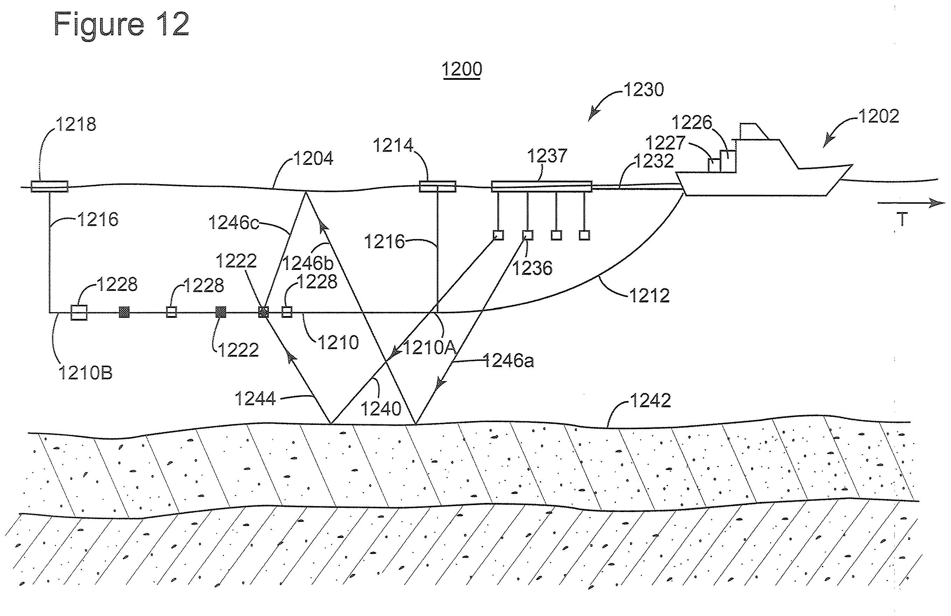

The above processes may be implemented in a land survey or a marine survey. If a marine survey is employed, it typically has a setup as illustrated in Figure 12, which shows a system 1200 having a vessel 1202 that tows one or more streamers 1210 (only one is shown in the figure for simplicity) and a seismic source 1230. Note that seismic streamer 1210 may be horizontal as illustrated in the figure, but also slanted to the water surface 1204 or it may have a variable-depth profile. Streamer 1210 is attached through a lead-in cable (or other cables) 1212 to vessel 1202, while source 1230 is attached through an umbilical 1232 to the vessel. A head float 1214, which floats at the water surface 1204, is connected through a cable 1216 to the head 1210A of streamer 1210, while a tail buoy 1218 is connected through a similar cable 1216 to the tail 1210B of streamer 1210. Head float 1214 and tail buoy 1218 maintain the streamer's depth.

Streamer 1210 includes plural sensors 1222 (only a few are illustrated in Figure 1 for simplicity) for collecting seismic data. Position control devices 1228 (also known as birds) may be distributed along the streamer for controlling a vertical and/or horizontal position of the streamer.

Source 1230 may include plural source elements 1236 that are connected to a float 1237 to travel at desired depths below the water surface 1204. During operation, vessel 1202 follows a predetermined path T while source elements (usually air guns) 1236 emit seismic waves 1240. These waves bounce off the ocean bottom 1242 and other layer interfaces below the ocean bottom 1242 and propagate as reflected/refracted waves 1244 that are recorded (as primaries) by sensors 1222. However, each primary has an associated ghost 1246c, which corresponds to another wave 1246a generated by source 1230, reflected as wave 1246b from the ocean bottom 1242, and then further reflected from the water surface 1204.

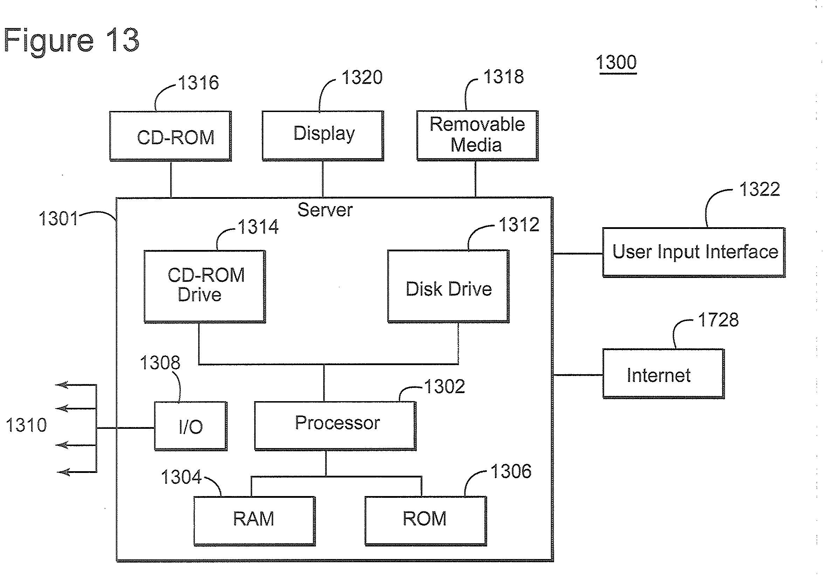

The above method and others may be implemented in a computing system specifically configured to calculate the subsurface image. An example of a representative computing system capable of carrying out operations in accordance with the exemplary embodiments is illustrated in Figure 13. Hardware, firmware, software or a combination thereof may be used to perform the various steps and operations described herein.

The exemplary computing system 1300 suitable for performing the activities described in the exemplary embodiments may include a server 1301. Such a server 1301 may include a central processor (CPU) 1302 coupled to a random access memory (RAM) 1304 and to a read-only memory (ROM) 1306. ROM 1306 may also be other types of storage media to store programs, such as programmable ROM (PROM), erasable PROM (EPROM), etc. Processor 1302 may communicate with other internal and external components through input/output (I/O) circuitry 1308 and bussing 1310, to provide control signals and the like. Processor 1302 carries out a variety of functions as are known in the art, as dictated by software and/or firmware instructions.

The server 1301 may also include one or more data storage devices, including a disk drive 1312, CD-ROM drives 1314, and other hardware capable of reading and/or storing information such as DVD, etc. In one embodiment, software for carrying out the above-discussed steps may be stored and distributed on a CD- or DVD-ROM 1316, removable memory device 1318 or other form of media capable of portably storing information. These storage media may be inserted into, and read by, devices such as the CD-ROM drive 1314, the disk drive 1312, etc. The server 1301 may be coupled to a display 1320, which may be any type of known display or presentation screen, such as LCD, LED displays, plasma displays, cathode ray tubes (CRT), etc. A user input interface 1322 is provided, including one or more user interface mechanisms such as a mouse, keyboard, microphone, touchpad, touch screen, voice-recognition system, etc.

The server 1301 may be coupled to other computing devices, such as landline and/or wireless terminals, via a network. The server may be part of a larger network configuration as in a global area network (GAN) such as the Internet 1328, which allows ultimate connection to various landline and/or mobile client devices. The computing device may be implemented on a vehicle that performs a land seismic survey.

The disclosed exemplary embodiments provide a system and a method for de-blending recorded seismic data. It should be understood that this description is not intended to limit the invention. On the contrary, the exemplary embodiments are intended to cover alternatives, modifications and equivalents, which are included in the scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A computer-implemented method for de-blending seismic data associated with a subsurface of the earth, the method comprising:

   receiving initial seismic traces (600) recorded by plural sources;
   de-blending, in a processor (1302), the initial seismic traces (600) to generate de-blended seismic traces (818, 820); and
   generating an image of the subsurface based on the de-blended seismic traces (818, 820),
   wherein the initial seismic traces (600) include uncontaminated portions corresponding to time intervals substantially free from cross-talk from other sources, and the uncontaminated portions are interpolated, and said interpolated uncontaminated portions are subtracted from other initial seismic traces to remove cross-talk noise on said other initial seismic traces.

2. The method of Claim 1, wherein the plural seismic sources are shot with a given pattern such that each source is shot first and the remainder of the sources are shot with predetermined one or more time delays relative to the first shot source.

3. The method of Claim 2, wherein the given pattern includes a series of shot members, each shot member having one source of the plural sources being shot first and the remainder of the plural sources being shot with the predetermined one or more time delays, after the one source has been fired so that cross-talk is present.

4. The method of Claim 1, wherein the uncontaminated portions include first portions (602) of substantially non-blended data and the initial seismic traces (600) include second portions (604) of blended data.

5. The method of Claim 4, wherein the step of de-blending comprises:

   separating the initial seismic traces (600) into odd (606) and even (608) seismic traces;
   interpolating, for each source of the plural sources, odd first portions (606) to determine interpolated even first portions (614) and even first portions (612) to determine interpolated odd first portions (616);
   applying the constant time delay to the interpolated even first portions (614) and to the interpolated odd first portions (616); and
   subtracting the time-delayed, interpolated, even first portions (618) and the time-delayed, interpolated, odd first portions (620) from the initial seismic data (600) to obtain estimated de-blended traces (622).

6. The method of Claim 5, wherein the odd seismic traces correspond to odd shot points and the even seismic traces correspond to even seismic traces.

7. The method of Claim 5, further comprising:

   separating the estimated de-blended traces (622) into first source odd traces (802) and second source even traces (804);
   interpolating the first source odd traces (802) to obtain interpolated first source even traces (904);
   time-delaying the interpolated first source even traces (904) with the constant time delay to obtain time-delayed, interpolated, first source even traces (908);
subtracting from the initial seismic traces (600) the first source odd traces (802) and the time-delayed, interpolated, first source even traces (908) to obtain de-blended second source even traces and de-blended, time-delayed, odd traces (912); and
time-aligning the de-blended, time-delayed, odd traces to obtain de-blended second source odd and even traces (916).

**8.** The method of Claim 7, further comprising:

interpolating the second source even traces (804) to obtain interpolated second source odd traces (906);
time-delaying the interpolated second source odd traces (906) with the constant delay time to obtain time-delayed, interpolated, second source odd traces (910); and
subtracting from the initial seismic traces (600) the second source even traces (804) and the time-delayed, interpolated, second source odd traces (910) to obtain de-blended first source odd traces and de-blended, time-delayed, first source even traces; and
time-aligning the de-blended, time-delayed, first source even traces to obtain de-blended, even and odd first source traces (918).

**9.** The method of Claim 5, wherein one or more steps may be performed in a model domain, which is different from a time domain of the initial seismic traces.

**10.** The method of Claim 8, further comprising: combining de-blended, even and odd first source traces (918) with the de-blended, even and odd second source traces (916) to obtain the de-blended seismic traces (818, 820).

**11.** The method of claim 1, wherein a small dithering is applied to the time intervals from shot to shot.

**12.** The method of Claim 1, further comprising: interpolating the uncontaminated portions and using these interpolated uncontaminated portions to attenuate the cross-talk noise.

**13.** The method of Claim 1, wherein said plural sources being plural sources $S_1$ to $S_N$, where N is a natural number, the plural seismic sources $S_1$ to $S_N$ are shot with a given pattern that includes a sequence of shootings that is repeated after each source $S_i$ is shot first and the remainder of the sources are shot with predetermined one or more time delays relative to the first shot source.

**14.** A computing system (1300) for de-blending seismic data associated with a subsurface of the earth, the computing device comprising:

an interface (1308) configured to receive initial seismic traces (600) recorded by plural sources $S_1$ to $S_N$, where N is a natural number; and
a processor (1302) connected to the interface (1308) and configured to,
de-blend the initial seismic traces (600) to generate de-blended seismic traces (818, 820); and
generate an image of the subsurface based on the de-blended seismic traces (818, 820),
wherein the initial seismic traces (600) include uncontaminated portions corresponding to time intervals substantially free from cross-talk from other sources, and the uncontaminated portions are interpolated , and said interpolated uncontaminated portions are subtracted from other initial seismic traces to remove cross-talk noise on said other initial seismic traces.

## Patentansprüche

**1.** Computerimplementiertes Verfahren zum Entmischen seismischer Daten, die mit einem Erduntergrund in Zusammenhang stehen, wobei das Verfahren Folgendes umfasst:

Empfangen anfänglicher seismischer Abtastspuren (600), die durch mehrere Quellen aufgezeichnet werden,
Entmischen der anfänglichen seismischen Abtastspuren (600) in einem Prozessor (1302), um entmischte seismische Abtastspuren (818, 820) zu erzeugen, und
Erzeugen eines Bildes des Untergrundes basierend auf den entmischten seismischen Abtastspuren (818, 820),
wobei die anfänglichen seismischen Abtastspuren (600) nicht kontaminierte Abschnitte beinhalten, die Zeitintervallen entsprechen, die im Wesentlichen frei von Übersprechen von anderen Quellen sind, und die nicht kontaminierten Abschnitte interpoliert werden und die interpolierten, nicht kontaminierten Abschnitte von anderen anfänglichen seismischen Abtastspuren subtrahiert werden, um Übersprechrauschen auf den anderen anfänglichen seismischen Abtastspuren zu entfernen.

**2.** Verfahren nach Anspruch 1, wobei die mehreren seismischen Quellen mit einem gegebenen Muster abgefeuert werden, so dass jede Quelle zuerst abgefeuert wird und der Rest der Quellen mit einer oder mehreren festgelegten Zeitverzögerungen im Verhältnis zu der zuerst abgefeuerten Quelle abgefeuert wird.

3. Verfahren nach Anspruch 2, wobei das gegebene Muster eine Reihe von Schusselementen beinhaltet, wobei jedes Schusselement eine Quelle der mehreren Quellen aufweist, die zuerst abgefeuert werden, und den Rest der mehreren Quellen, die mit der einen oder den mehreren festgelegten Zeitverzögerungen abgefeuert werden, nachdem eine Quelle abgefeuert wurde, so dass Übersprechen vorliegt.

4. Verfahren nach Anspruch 1, wobei die nicht kontaminierten Abschnitte erste Abschnitte (602) von im Wesentlichen nicht vermischten Daten beinhalten und die anfänglichen seismischen Abtastspuren (600) zweite Abschnitte (604) von vermischten Daten beinhalten.

5. Verfahren nach Anspruch 4, wobei der Schritt des Entmischens Folgendes umfasst:

Trennen der anfänglichen seismischen Abtastspuren (600) in ungerade (606) und gerade (608) seismische Abtastspuren,
Interpolieren ungerader erster Abschnitte (606), um interpolierte gerade erste Abschnitte (614) zu bestimmen, und gerader erster Abschnitte (612), um interpolierte ungerade erste Abschnitte (616) zu bestimmen, für jede Quelle der mehreren Quellen,
Anwenden der konstanten Zeitverzögerung auf die interpolierten geraden ersten Abschnitte (614) und die interpolierten ungeraden Abschnitte (616) und
Subtrahieren der zeitverzögerten, interpolierten geraden ersten Abschnitte (618) und der zeitverzögerten, interpolierten ungeraden ersten Abschnitte (620) von den anfänglichen seismischen Daten (600), um geschätzte entmischte Abtastspuren (622) zu erzielen.

6. Verfahren nach Anspruch 5, wobei die ungeraden seismischen Abtastspuren ungeraden Schusspunkten entsprechen und die geraden seismischen Abtastspuren geraden seismischen Abtastspuren entsprechen.

7. Verfahren nach Anspruch 5, ferner Folgendes umfassend:

Trennen der geschätzten entmischten Abtastspuren (622) in ungerade Abtastspuren der ersten Quelle (802) und gerade Abtastspuren der zweiten Quelle (804),
Interpolieren der ungeraden Abtastspuren der ersten Quelle (802), um interpolierte gerade Abtastspuren der ersten Quelle (904) zu erzielen,
Zeitverzögern der interpolierten geraden Abtastspuren der ersten Quelle (904) mit der konstanten Zeitverzögerung, um zeitverzögerte, interpolierte gerade Abtastspuren der ersten Quelle (908) zu erzielen,
Subtrahieren der ungeraden Abtastspuren der ersten Quelle (802) und der zeitverzögerten, interpolierten geraden Abtastspuren der ersten Quelle (908) von den anfänglichen seismischen Abtastspuren (600), um entmischte gerade Abtastspuren der zweiten Quelle und entmischte zeitverzögerte ungerade Abtastspuren (912) zu erzielen, und
zeitliches Abstimmen der entmischten, zeitverzögerten ungeraden Abtastspuren, um entmischte ungerade und gerade Abtastspuren der zweiten Quelle (916) zu erzielen.

8. Verfahren nach Anspruch 7, ferner Folgendes umfassend:

Interpolieren der geraden Abtastspuren der zweiten Quelle (804), um interpolierte ungerade Abtastspuren der zweiten Quelle (906) zu erzielen,
Zeitverzögern der interpolierten ungeraden Abtastspuren der zweiten Quelle (906) mit der konstanten Zeitverzögerung, um zeitverzögerte, interpolierte ungerade Abtastspuren der zweiten Quelle (910) zu erzielen, und
Subtrahieren der geraden Abtastspuren der zweiten Quelle (804) und der zeitverzögerten, interpolierten ungeraden Abtastspuren der zweiten Quelle (910) von den anfänglichen seismischen Abtastspuren (600), um entmischte ungerade Abtastspuren der ersten Quelle und entmischte zeitverzögerte gerade Abtastspuren der ersten Quelle zu erzielen, und
zeitliches Abstimmen der entmischten, zeitverzögerten geraden Abtastspuren der ersten Quelle, um entmischte gerade und ungerade Abtastspuren der ersten Quelle (918) zu erzielen.

9. Verfahren nach Anspruch 5, wobei ein oder mehrere Schritte in einer Modelldomäne ausgeführt werden können, die sich von einer Zeitdomäne der anfänglichen seismischen Abtastspuren unterscheidet.

10. Verfahren nach Anspruch 8, ferner Folgendes umfassend:
Kombinieren entmischter gerader und ungerader Abtastspuren der ersten Quelle (918) mit den entmischten geraden und ungeraden Abtastspuren der zweiten Quelle (916), um die entmischten seismischen Abtastspuren (818, 820) zu erzielen.

11. Verfahren nach Anspruch 1, wobei auf die Zeitintervalle von Schuss zu Schuss eine kleine Schwankung (Dithering) angewendet wird.

**12.** Verfahren nach Anspruch 1, ferner Folgendes umfassend:
Interpolieren der nicht kontaminierten Abschnitte und Verwenden dieser interpolierten, nicht kontaminierten Abschnitte, um Übersprechrauschen zu dämpfen.

**13.** Verfahren nach Anspruch 1, wobei die mehreren Quellen mehrere Quellen $S_1$ bis $S_N$ sind, wobei N eine natürliche Zahl ist, wobei die mehreren seismischen Quellen $S_1$ bis $S_N$ mit einem gegebenen Muster abgefeuert werden, das eine Abfolge von Schüssen beinhaltet, die wiederholt wird, nachdem jede Quelle $S_i$ das erste Mal abgefeuert wurde und der Rest der Quellen mit einer oder mehreren festgelegten Zeitverzögerungen im Verhältnis zur zuerst abgefeuerten Quelle abgefeuert wurde.

**14.** Rechensystem (1300) zum Entmischen seismischer Daten, die mit einem Erduntergrund in Zusammenhang stehen, wobei das Rechensystem Folgendes umfasst:

eine Schnittstelle (1308), die dafür konfiguriert ist, anfängliche seismische Abtastspuren (600) zu empfangen, die durch mehrere Quellen $S_1$ bis $S_N$ aufgezeichnet werden, wobei N eine natürliche Zahl ist, und
einen Prozessor (1302), der mit der Schnittstelle (1308) verbunden und für Folgendes konfiguriert ist:

Entmischen der anfänglichen seismischen Abtastspuren (600), um entmischte seismische Abtastspuren (818, 820) zu erzeugen, und
Erzeugen eines Bildes des Untergrundes, basierend auf den entmischten seismischen Abtastspuren (818, 820),

wobei die anfänglichen seismischen Abtastspuren (600) nicht kontaminierte Abschnitte beinhalten, die Zeitintervallen entsprechen, die im Wesentlichen frei von Übersprechen von anderen Quellen sind, und die nicht kontaminierten Abschnitte interpoliert werden und die interpolierten, nicht kontaminierten Abschnitte von anderen anfänglichen seismischen Abtastspuren subtrahiert werden, um Übersprechrauschen auf den anderen anfänglichen seismischen Abtastspuren zu entfernen.

## Revendications

**1.** Procédé, mis en oeuvre par ordinateur, de séparation de données sismiques associées à une subsurface de la terre, le procédé comprenant les étapes ci-dessous consistant à :

recevoir des traces sismiques initiales (600) enregistrées par plusieurs sources ;
séparer, dans un processeur (1302), les traces sismiques initiales (600), en vue de générer des traces sismiques séparées (818, 820) ; et
générer une image de la subsurface sur la base des traces sismiques séparées (818, 820) ;
dans lequel les traces sismiques initiales (600) incluent des parties non contaminées correspondant à des intervalles de temps sensiblement exempts de diaphonie provenant d'autres sources, lesdites parties non contaminées sont interpolées, et lesdites parties non contaminées interpolées sont soustraites d'autres traces sismiques initiales en vue d'éliminer un bruit diaphonique sur lesdites autres traces sismiques initiales.

**2.** Procédé selon la revendication 1, dans lequel les multiples sources sismiques sont tirées avec un motif donné, de sorte que chaque source est tirée tout d'abord et que les sources restantes sont tirées avec un ou plusieurs retards temporels prédéterminés par rapport à la première source tirée.

**3.** Procédé selon la revendication 2, dans lequel le motif donné inclut une série d'éléments de tir, chaque élément de tir présentant une source des multiples sources qui est tirée tout d'abord et le reste des multiples sources étant tiré avec ledit un ou lesdits plusieurs retards temporels prédéterminés, après que ladite une source a été tirée, de sorte que de la diaphonie est présente.

**4.** Procédé selon la revendication 1, dans lequel les parties non contaminées incluent des premières parties (602) de données sensiblement non mélangées et les traces sismiques initiales (600) incluent des secondes parties (604) de données mélangées.

**5.** Procédé selon la revendication 4, dans lequel l'étape de séparation comprend les étapes ci-dessous consistant à :

séparer les traces sismiques initiales (600) en des traces sismiques impaires (606) et des traces sismiques paires (608) ;
interpoler, pour chaque source des multiples sources, des premières parties impaires (606), en vue de déterminer des premières parties paires interpolées (614), ainsi que des premières parties paires (612), en vue de déterminer des premières parties impaires interpolées (616) ;
appliquer le retard temporel constant aux premières parties paires interpolées (614) et aux premières parties impaires interpolées (616) ; et

soustraire les premières parties paires interpolées retardées dans le temps (618) et les premières parties impaires interpolées retardées dans le temps (620), des données sismiques initiales (600), en vue d'obtenir des traces séparées estimées (622).

**6.** Procédé selon la revendication 5, dans lequel les traces sismiques impaires correspondent à des points de tir impairs et les traces sismiques paires correspondent à des traces sismiques paires.

**7.** Procédé selon la revendication 5, comprenant en outre les étapes ci-dessous consistant à :

séparer les traces séparées estimées (622) en des premières traces impaires de source (802) et des secondes traces paires de source (804) ;
interpoler les premières traces impaires de source (802) en vue d'obtenir des premières traces paires de source interpolées (904) ;
retarder dans le temps les premières traces paires de source interpolées (904) avec le retard temporel constant, en vue d'obtenir des premières traces paires de source interpolées retardées dans le temps (908) ;
soustraire, des traces sismiques initiales (600), les premières traces impaires de source (802) et les premières traces paires de source interpolées retardées dans le temps (908), en vue d'obtenir des secondes traces impaires de source séparées et des traces impaires retardées dans le temps séparées (912) ; et
aligner dans le temps les traces impaires retardées dans le temps séparées, en vue d'obtenir des secondes traces paires et traces impaires de source séparées (916).

**8.** Procédé selon la revendication 7, comprenant en outre les étapes ci-dessous consistant à :

interpoler les secondes traces paires de source (804), en vue d'obtenir des secondes traces impaires de source interpolées (906) ;
retarder dans le temps les secondes traces impaires de source interpolées (906) avec le temps de retard constant, en vue d'obtenir des secondes traces impaires de source interpolées retardées dans le temps (910) ; et
soustraire, des traces sismiques initiales (600), les secondes traces paires de source (804) et les secondes traces impaires de source interpolées retardées dans le temps (910), en vue d'obtenir des premières traces impaires de source séparées et des premières traces paires de source retardées dans le temps séparées ; et
aligner dans le temps les premières traces paires de source retardées dans le temps séparées, en vue d'obtenir des premières traces paires et impaires de source séparées (918).

**9.** Procédé selon la revendication 5, dans lequel une ou plusieurs étapes peuvent être mises en oeuvre dans un domaine de modèle, lequel est différent d'un domaine temporel des traces sismiques initiales.

**10.** Procédé selon la revendication 8, comprenant en outre les étapes ci-dessous consistant à :
combiner de premières traces paires et traces impaires de source séparées (918), avec des secondes traces paires et traces impaires de source séparées (916), en vue d'obtenir des traces sismiques séparées (818, 820).

**11.** Procédé selon la revendication 1, dans lequel une petite superposition est appliquée aux intervalles de temps d'un tir à l'autre.

**12.** Procédé selon la revendication 1, comprenant en outre l'étape ci-dessous consistant à :
interpoler les parties non contaminées et utiliser ces parties non contaminées interpolées en vue d'atténuer le bruit diaphonique.

**13.** Procédé selon la revendication 1, dans lequel lesdites multiples sources sont de multiples sources $S_1$ à $S_N$, où « N » est un nombre naturel, les multiples sources sismiques $S_1$ à $S_N$ sont tirées avec un motif donné qui inclut une séquence de tirs qui est répétée après que chaque source $S_i$ a été tirée tout d'abord et que les sources restantes ont été tirées avec un ou plusieurs retards temporels prédéterminés par rapport à la première source tirée.

**14.** Système informatique (1300) destiné à séparer des données sismiques associées à une subsurface de la terre, le système informatique comprenant :

une interface (1308) configurée de manière à recevoir des traces sismiques initiales (600) enregistrées par de multiples sources $S_1$ à $S_N$, où « N » est un nombre naturel ; et
un processeur (1302) connecté à l'interface (1308) et configuré de manière à :

séparer les traces sismiques initiales (600) en vue de générer des traces sismiques séparées (818, 820) ; et
générer une image de la subsurface sur la base des traces sismiques séparées (818, 820) ;

dans lequel les traces sismiques initiales (600) incluent des parties non contaminées correspondant à des intervalles de temps sensiblement exempts de diaphonie provenant d'autres sources, les parties non contaminées sont interpolées, et lesdites parties non contaminées interpolées sont soustraites d'autres traces sismiques initiales en vue d'éliminer un bruit diaphonique sur lesdites autres traces sismiques initiales.

Figure 1A
Figure 1B
10
0s
10a
10b
10c
12
6s
12a
12b
12c
14
12s
t
16
20
x
t

Figure 2A
Figure 2B
10
12
12a
10c
14
t
30
x
32
t

Figure 3
X
Model
common offset
common midpoint
common receiver
common shot
1
2
3
4
t
40

Figure 4

1001
1002
1003
1004
Shot Point
t1 =0ms
t2 =100ms
t3 =200ms
Time
S2
S2
S1
S1
S2
S1
S1
S2
S2
S1

Figure 5
500
Shot sources with constant time delay
502
Collect seismic data
504
Select traces and time window
506
Interpolate selected traces
508
Select interpolated traces
510
Apply time shift
512
Subtract time-shifted traces form initial data set
514
End of original dataset
No
Yes
516
Generate estimated de-bundled data
518
Construct final image

# Figure 6A

622a
600
602
606
608
604
610
612
614
616
620
618
622a
622b
622

Figure 6B
600
604
640
$S_{1a}$
640
$S_{1b}$ + $S_{1c}$
614
$S_{1d}$
618
$S_{1e}$
630
$S_{2a}$
632
$S_{2b}$
636
$S_{2d}$
638
$S_{2e}$
640

Figure 7
700
Receive estimated de-blended data
702
Split data into odd and even shot point data sets
704
Interpolate both data sets
706
Time delay selected traces from both data sets
708
Subtract time-delays data sets from original data
710
Align traces
712
Generate de-blended data
714
Generate image of the subsurface

Figure 8
800
802
804
806
808
810
812
600
814
816
818
820

Figure 9
$S_1^{Odd}$
900
$S_2^{Even}$
902
600
$S_1^{Odd} + S_{2\ Del}^{Odd}$
$S_{1\ Del}^{Even} + S_2^{Even}$
$S_1^{Odd}$
802
$S_2^{Even}$
804
Interplolation
Interplolation
$S_1^{Even}$
904
$S_2^{Odd}$
906
802
908
910
804
$S_1^{Odd}$
+
$S_{1\ Del}^{Even}$
$S_{2\ Del}^{Odd}$
+
$S_2^{Even}$
-
-
$S_{2\ Del}^{Odd}$ $S_2^{Even}$
912
914
$S_1^{Odd}$ $S_{1\ Del}^{Even}$
Time aligned
Time aligned
$S_2^{Odd}$ $S_2^{Even}$
916
918
$S_1^{Odd}$ $S_1^{Even}$
920
$S_1^{Odd}$, $S_1^{Even}$, $S_1^{Odd}$, $S_2^{Even}$

Figure 10

1000

Receiving initial seismic traces recorded by plural sources

1002

De-blending, in a processor, the initial seismic traces to generate de-blended seismic traces

1004

Generating an image of the subsurface based on the de-blended seismic traces

# Figure 11

1100: Separating the estimated de-blended traces into first source odd traces and second source even traces

1102: Interpolating the first source odd traces to obtain interpolated first source even traces

1104: Time-delaying the interpolated first source even traces with the constant time delay to obtain time-delayed, interpolated, first source even traces

1106: Subtracting from the initial seismic traces the first source odd traces and the time-delayed, interpolated first source even traces to obtain de-blended second source even traces and de-blended, time-delayed, od traces

1108: Time-aligning the de-blended, time-delayed, odd traces to obtain de-blended second source odd and even traces

1110: Interpolating the second source even traces to obtain interpolated second source odd traces

1112: Time-delaying the interpolated second source odd traces with the constant delay time to obtain time-delayed, interpolated, second source odd traces

1114: Subtracting from the initial seismic traces the second source even traces and the time-delayed, interpolated, second source odd traces to obtain de-blended first source odd traces and de-blended, time-delayed, first source even traces

1116: Time-aligning the de-blended, time-delayed, first source even traces to obtain de-blended, even and odd first source traces

1118: Combing de-blended, even and odd first source traces with the de-blended, even and odd second source traces to obtain the de-blended seismic traces

Figure 12
1200
1202
T
1226
1227
1232
1230
1212
1242
1237
1236
1246a
1214
1216
1210A
1240
1210
1228
1246b
1204
1246c
1222
1244
1218
1210B

Figure 13
1300
1322
User Input Interface
1728
Internet
1318
Removable Media
1320
Display
1316
CD-ROM
Server
1312
Disk Drive
1314
CD-ROM Drive
1302
Processor
1306
ROM
RAM
1304
I/O
1308
1301
1310

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2012147701 A1
- US 2012176861 A1


### Non-patent literature cited in the description


- **HAMPSON et al.** Acquisition using simultaneous sources. *Leading Edge,* vol. 27 (7
- **STEFANI et al.** Acquisition using simultaneous sources. *69th EAGE Conference & Exhibition*
- **ABMA et al.** Separating simultaneous sources by inversion. *71st EAGE Conference & Exhibition*
- **AKERBERG et al.** Simultaneous source separation by sparse Radon transform. *78th Ann. Internat. Mtg.: Soc. of Expl. Geophys*
- **MOORE et al.** Simultaneous source separation using dithered sources. *78th Ann. Internat. Mtg.: Soc. of Expl. Geophys.*